# EUROPÄISCHE PATENTANMELDUNG

(11) **EP 2 262 100 A2**
(43) Veröffentlichungstag der Anmeldung: **15.12.2010**
(21) Anmeldenummer: 10162018.5
(22) Anmeldetag: 05.05.2010
(51) Int. Cl.: H02P 8/34

(54) **Verfahren, Verwendung des Verfahrens, und Einrichtung zur Detektion eines defekten Aktors sowie eine Heiztechnikanlage dazu**

(30) Priorität: 29.05.2009 DE 102009023427
(71) Anmelder: Robert Bosch GmbH, 70442 Stuttgart (DE)
(72) Erfinder: Krieger, Klaus, 73249 Wernau (DE); Oehrlein, Manfred, 73278 Schlierbach (DE); Woerner, Philipp, 70794 Filderstadt (DE); Schwarze, Wolfram, 01705 Freital (DE)

(57) **Zusammenfassung**

Die Erfindung betrifft ein Verfahren, eine Verwendung des Verfahrens und eine Einrichtung zur Detektion mindestens eines defekten Aktors (2) in einer Anlage mit mehreren über Antriebsimpulse angetriebene Aktoren (2), sowie eine Heiztechnikanlage mit einer Einrichtung.

Es ist eine Aufgabe der Erfindung ein Auffinden eines defekten Aktors (2) in einer Anlage auf einfache Weise zu ermöglichen.

Gekennzeichnet ist das Verfahren dadurch, dass bei Vorliegen eines Defekts anstelle und/oder zusätzlich zum Antriebsimpuls mindestens ein gegenüber dem Antriebsimpuls veränderter Detektionsimpuls an die Aktoren (2) gesendet wird. Die Einrichtung ist **dadurch gekennzeichnet, dass** ein Detektionsimpulsgenerator vorgesehen ist, um bei Vorliegen eines Defekts mindestens einen gegenüber dem Antriebsimpuls zum Antreiben veränderten Detektionsimpuls zu generieren und an den wenigstens einen Aktor (2) zu senden.

## Beschreibung

### BESCHREIBUNG

Verfahren, Verwendung des Verfahrens, und Einrichtung zur Detektion eines defekten Aktors sowie eine Heiztechnikanlage dazu

Die Erfindung betrifft ein Verfahren zur Detektion mindestens eines defekten Aktors in einer Anlage mit mehreren über Antriebsimpulse, insbesondere gesendete Antriebsimpulse, angetriebene Aktoren nach dem Oberbegriff des Anspruchs 1.

Weiter betrifft die Erfindung eine Verwendung eines Verfahrens zur Detektion mindestens eines defekten Aktors gemäß Anspruch 5.

Zudem betrifft die Erfindung eine Einrichtung zur Detektion mindestens eines defekten Aktors in einer Anlage mit mehreren, über gesendete Antriebsimpulse angetriebenen Aktoren gemäß dem Oberbegriff des Anspruchs 6.

Nicht zuletzt betrifft die Erfindung eine Heiztechnikanlage mit mehreren, über gesendete Antriebsimpulse angetriebenen Aktoren nach dem Oberbegriff des Anspruchs 9.

Das Auffinden defekter Aktoren ist gemäß dem Stand der Technik nur quantitativ indirekt über ein Erkennen von Fehlfunktionen möglich. Beispielsweise lässt sich bei einem Schrittmotor eines Umsteuerventils ein blockierter Motor nur anhand fehlerhafter Fluidströmungen erkennen. Auch bei anderen Aktoren aufweisenden Anlagen lässt sich ein defekter Aktor nicht direkt detektieren, sondern es kann nur anhand von verschiedenen Indizien auf einen defekten Aktor geschlossen werden, ohne diesen aber genauer lokalisieren oder markieren zu können.

Der Erfindung liegt die Aufgabe zugrunde, ein Auffinden eines defekten Aktors in einer Anlage auf einfache Weise zu ermöglichen.

Erfindungsgemäß wird dies durch die Gegenstände mit den Merkmalen des Patentanspruches 1, des Patentanspruchs 5, des Patentanspruch 6 und des Patentanspruchs 9 gelöst. Vorteilhafte Weiterbildungen sind den Unteransprüchen zu entnehmen.

Das erfindungsgemäße Verfahren zur Detektion mindestens eines defekten Aktors in einer Anlage mit mehreren über Antriebsimpulse angetriebene Aktoren, insbesondere von elektromotorischen Aktoren, ist **dadurch gekennzeichnet, dass** bei Vorliegen eines Defekts anstelle und/oder zusätzlich zum Antriebsimpuls mindestens ein gegenüber dem Antriebsimpuls veränderter Detektionsimpuls an die Aktoren gesendet wird. Neben einem Antriebsimpuls zum Betreiben des Aktors oder der Aktoren wird ein zusätzlicher Impuls generiert, welcher eine Detektion des defekten Aktors erleichtert und/oder den defekten Aktor markiert. Dieses Markieren kann beispielsweise akustisch realisiert werden.

In einer Ausführungsform des erfindungsgemäßen Verfahrens ist vorgesehen, dass der Detektionsimpuls gegenüber dem Antriebsimpuls zumindest hinsichtlich der Frequenz verändert wird. Hierdurch können verschiedene Signale generiert werden, welche eine Detektion des defekten Aktors erleichtern. Die Frequenz kann zum Beispiel erhöht oder reduziert werden.

In einer anderen Ausführungsform der vorliegenden Erfindung ist vorgesehen, dass die Frequenz des Detektionsimpuls zu körperschallinduzierenden Frequenzen verändert wird, um den Aktor akustisch zu markieren. So kann die Frequenz derart verändert werden, dass diese Eigenschwingungen, Resonanzschwingungen und dergleichen bei dem defekten Aktor erzeugen.

In einer weiteren Ausführungsform der vorliegenden Erfindung ist vorgesehen, dass der Detektionsimpuls bei Vorliegen eines Defekts sofort oder verzögert bei einem folgenden Nutzereingriffs als Dauerimpuls oder als intermittierender Impuls erzeugt wird. Der Detektionsimpuls kann durch den Benutzer manuell und/oder zumindest halbautomatisch bei Erkennen eines Defekts an einem Aktor generiert werden.

Die erfindungsgemäße Verwendung eines Verfahren zur Detektion mindestens eines defekten Aktors in einer Anlage mit mehreren über Antriebsimpulse angetriebene Aktoren lässt sich insbesondere in Anlagen anwenden, die ausgewählt sind aus der Gruppe der heiztechnischen Anlagen umfassend Heizgeräte, Thermen, Solarthermieheizanlagen und dergleichen, und insbesondere für Aktoren die ausgewählt sind aus der Gruppe der elektromotorischen Aktoren umfassend Umsteuerventile, Hydraulik-Aktoren, Pneumatik-Aktoren, Elektromotoren, Zylinder, elektrochemische Aktoren, elektromechanische Aktoren und dergleichen.

Die erfindungsgemäße Einrichtung zur Detektion mindestens eines defekten Aktors in einer Anlage mit mehreren, über gesendete Antriebsimpulse angetriebenen Aktoren, insbesondere von elektromotorischen Aktoren, ist **dadurch gekennzeichnet, dass** ein Detektionsimpulsgenerator vorgesehen ist, um bei Vorliegen eines Defekts mindestens einen gegenüber dem Antriebsimpuls zum Antreiben veränderten Detektionsimpuls zu generieren und an den wenigstens einen Aktor zu senden.

Noch eine weitere Ausführungsform der vorliegenden Erfindung sieht vor, dass der Detektionsimpulsgenerator mit einem Impulsgeber zum Antreiben der Aktoren gekoppelt ist, um bei Vorliegen eines Defekts einen veränderten Impuls an wenigstens einen Aktor zu leiten. Es können mehrere Detektionsimpulsgeber vorgesehen sein. Der Detektionsimpulsgeber kann auch separat ausgebildet sein und durch ein separates Signal, beispielsweise durch einen Nutzereingriff, einen Detektionsimpuls erzeugen.

Wiederum eine andere Ausführungsform der vorliegenden Erfindung sieht vor, dass der Detektionsimpulsgenerator und der Impulsgeber mit einer Steuereinrichtung gekoppelt sind, die einen Detektionsabschnitt zum Detektieren von Defekten und einen Steuerabschnitt zum Ansteuern des Detektionsimpulsgenerators und des Impulsgebers aufweist, um bei Vorliegen eines Defekts einen gegenüber dem im Betrieb erforderlichen Antriebsimpuls veränderten Impuls an wenigstens einen Aktor zu übermitteln.

Erfindungsgemäß ist die Heiztechnikanlage mit mehreren, über gesendete Antriebsimpulse angetriebene Aktoren, insbesondere mit mehreren elektromotorischen Aktoren, **dadurch gekennzeichnet, dass** eine erfindungsgemäße Einrichtung vorgesehen ist, um einen defekten Aktor zu detektieren.

Mit dem erfindungsgemäßen Verfahren, der erfindungsgemäßen Verwendung, der erfindungsgemäßen Einrichtung und der erfindungsgemäßen Heiztechnikanlage werden insbesondere die folgenden Vorteile realisiert:
Bislang werden die Aktoren nur zum Antreiben angesteuert. Hierzu werden bei entsprechenden Aktoren Wicklungen zum Bewegen beispielsweise eines Motors angesteuert. Dabei werden diese Wicklungen über Impulspakete so angesteuert, dass möglichst keine Geräusche erzeugt werden. Durch entsprechende Detektionsimpulse, beispielsweise Impulse höherer Frequenz, auf die Wicklungen, beispielsweise von Schrittmotoren, können akustische Signale wie Töne und dergleichen generiert werden. Insbesondere defekte Aktoren lassen sich so leicht akustisch markieren oder detektieren. So kann in Anlagen mit vielen Aktoren ein defekter Aktor genau lokalisiert werden und dann repariert oder ausgewechselt werden. Auf diese Weise lässt sich einfach eine Detektion defekter Aktoren realisieren.

Ein Aktor, insbesondere ein Schrittmotor, beispielsweise eines Umsteuerventils, wird im Betrieb zur Vermeidung von störenden Geräuschen mit niederen Frequenzen etwa kleiner 500 Hz betrieben. Um ein entsprechendes Signal zur Markierung und/oder Detektion eines defekten Aktors zu generieren, wird eine andere Frequenz verwendet, bevorzugt eine höhere Frequenz. Diese höhere Frequenz liegt insbesondere etwa über 1 kHz. Mit dieser höheren Frequenz wird gleichzeitig auch eine Stromaufnahme der entsprechenden Wicklung des Motors reduziert, sodass eine ungewollte Erwärmung des Aktors vermieden wird. Somit lässt sich beispielsweise ein defekter Aktor auch thermisch oder über Wärmekameras lokalisieren. Bei Frequenzen im Bereich über 1 kHz lassen sich diese vom menschlichen Ohr verbessert wahrnehmen, sodass eine akustische Lokalisierung oder Detektion auch ohne Hilfsmittel realisierbar ist. In einer bevorzugten Ausführung werden die Frequenzen variabel gewählt, beispielsweise mit einer Modulation oder in Intervallen, sodass ein entsprechend generiertes Signal ebenfalls mit einer Modulation oder in Intervallen abgegeben wird.

Um Beeinträchtigungen durch das generierte Signal, welches als Warnsignal erklingen kann, zu vermeiden, kann das Warnsignal beispielsweise nur durch einen Nutzereingriff erklingen, das heißt bei einer Bedienung beispielsweise eines Heizgeräts durch einen Nutzer. Das Warnsignal kann zeitlich limitiert werden, beispielsweise auf eine Minute oder weniger, derart, dass der Nutzer ausreichend Zeit hat, den defekten Aktor zu finden und zugleich das Warnsignal nicht übermäßig erklingt. Ist der Nutzer ein Bediener der Anlage, kann das Warnsignal bei einer entsprechenden Bedienung erklingen. Ist der Nutzer ein Service-Techniker, so kann das Warnsignal bei Betätigen eines Service-Knopfes erklingen.

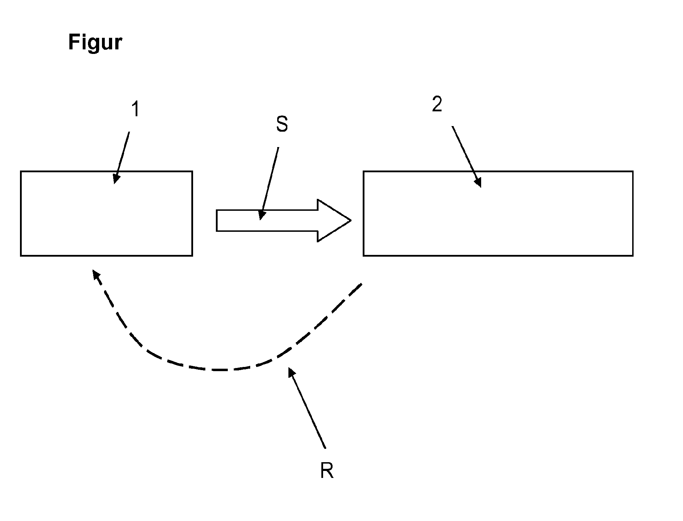

Die Zeichnung stellt ein Ausführungsbeispiel der Erfindung dar und zeigt in der einzigen Figur schematisch als Blockschaltbild die Funktionsweise der Erfindung.

Die Zeichnung zeigt schematisch als Blockschaltbild die Funktionsweise der Erfindung. Ausgehend von einem Regelgerät 1 werden Signale, beispielsweise in Form von Steuersignalen, Impulsen, Antriebsimpulsen, Detektionsimpulsen und dergleichen, dargestellt durch den Pfeil S, ausgesendet, um u. a. ein als Umsteuerventil ausgebildeten Aktor 2 anzutreiben und/oder anzusteuern. Der Aktor 2 ist in der Figur als intelligentes Umsteuerventil mit Mikroprozessorsteuerung ausgebildet. Dabei kann der Aktor 2 mit einem Rückkanal oder ohne einen Rückkanal (Pfeil R), über denen Informationen über den Aktor (2) an das Regelgerät 1 gesendet werden können, ausgebildet sein. In der dargestellten Figur ist kein Rückkanal von dem Aktor 2 zu dem Regelgerät 1 vorhanden. Liegt nun eine Fehlfunktion des Aktors 2 vor, so erkennt ein interner Sensor, beispielsweise ein Stromsensor, diese Fehlfunktion. Das Erkennen kann beispielsweise durch Vergleichen mit vorgegebenen Werten erfolgen, wobei eine Fehlfunktion bei Überschreiten eines Grenzwertes erkannt wird. Liegt eine Fehlfunktion vor, so wird die Frequenz eines ausgesendeten Signals S, welches dann als Detektionssignal fungiert, erhöht. Dies kann beispielsweise durch einen Mikroprozessor erfolgen, der an dem Aktor 2 angebracht sein kann. Erhöht der Mikroprozessor die Frequenz des entsprechenden Signals S oder Impulses, so entsteht an dem Aktor 2 ein Körperschall, der beim Betrieb des Aktors 2 nicht oder kaum zu erkennen ist. Dieser Körperschall liegt bevorzugt in einem erkennbaren, insbesondere ohne Hilfsmittel von einem Menschen hörbaren Bereich und ist insbesondere als Ton ausgebildet. Anhand dieses Tons kann ein Nutzer den defekten Aktor 2 lokalisieren.

## Patentansprüche

1. Verfahren zur Detektion mindestens eines defekten Aktors (2) in einer Anlage mit mehreren über Antriebsimpulse angetriebene Aktoren (2), insbesondere von elektromotorischen Aktoren (2),
**dadurch gekennzeichnet, dass** bei Vorliegen eines Defekts anstelle und/oder zusätzlich zum Antriebsimpuls mindestens ein gegenüber dem Antriebsimpuls veränderter Detektionsimpuls an die Aktoren (2) gesendet wird.

2. Verfahren nach Anspruch 1,
**dadurch gekennzeichnet, dass** der Detektionsimpuls gegenüber dem Antriebsimpuls zumindest hinsichtlich der Frequenz verändert wird.

3. Verfahren nach Anspruch 1 oder 2,
**dadurch gekennzeichnet, dass** die Frequenz des Detektionsimpuls zu körperschallinduzierenden Frequenzen verändert wird, um den Aktor (2) akustisch zu markieren.

4. Verfahren nach einem der vorherigen Ansprüche 1 bis 3,
**dadurch gekennzeichnet, dass** der Detektionsimpuls bei Vorliegen eines Defekts sofort oder verzögert bei einem folgenden Nutzereingriff als Dauerimpuls oder als intermittierender Impuls erzeugt wird.

5. Verwendung eines Verfahrens nach einem der vorherigen Ansprüche 1 bis 4 zur Detektion mindestens eines defekten Aktors (2) in einer Anlage mit mehreren, über gesendete Antriebsimpulse angetriebenen Aktoren (2), insbesondere für Anlagen, die ausgewählt sind aus der Gruppe der heiztechnischen Anlagen umfassend Heizgeräte, Thermen, Solarthermieheizanlagen und dergleichen, und insbesondere für Aktoren (2), die ausgewählt sind aus der Gruppe der elektromotorischen Aktoren (2) umfassend Umsteuerventile, Hydraulik-Aktoren, Pneumatik-Aktoren, Elektromotoren, Zylinder, elektrochemische Aktoren, elektromechanische Aktoren und dergleichen.

6. Einrichtung zur Detektion mindestens eines defekten Aktors (2) in einer Anlage mit mehreren, über gesendete Antriebsimpulse angetriebenen Aktoren (2), insbesondere von elektromotorischen Aktoren (2),
**dadurch gekennzeichnet, dass** ein Detektionsimpulsgenerator vorgesehen ist, um bei Vorliegen eines Defekts mindestens einen gegenüber dem Antriebsimpuls zum Antreiben veränderten Detektionsimpuls zu generieren und an den wenigstens einen Aktor (2) zu senden.

7. Einrichtung nach Anspruch 6,
**dadurch gekennzeichnet, dass** der Detektionsimpulsgenerator mit einem Impulsgeber zum Antreiben der Aktoren (2) gekoppelt ist, um bei Vorliegen eines Defekts einen veränderten Impuls an wenigstens einen Aktor (2) zu leiten.

8. Einrichtung nach Anspruch 6 oder 7,
**dadurch gekennzeichnet, dass** der Detektionsimpulsgenerator und der Impulsgeber mit einer Steuereinrichtung gekoppelt sind, die einen Detektionsabschnitt zum Detektieren von Defekten und einen Steuerabschnitt zum Ansteuern des Detektionsimpulsgenerators und des Impulsgebers aufweist, um bei Vorliegen eines Defekts einen gegenüber dem im Betrieb erforderlichen Antriebsimpuls veränderten Impuls an wenigstens einen Aktor (2) zu übermitteln.

9. Heiztechnikanlage mit mehreren, über gesendete Antriebsimpulse angetriebenen Aktoren (2), insbesondere mit mehreren elektromotorischen Aktoren (2),
**dadurch gekennzeichnet, dass** eine Einrichtung nach einem der vorherigen Ansprüche 6 bis 8 vorgesehen ist, um einen defekten Aktor (2) zu detektieren.
